# EUROPÄISCHE PATENTSCHRIFT

(11) **EP 2 224 099 B1**
(45) Veröffentlichungstag und Bekanntmachung des Hinweises auf die Patenterteilung: **10.04.2019**
(21) Anmeldenummer: 10001140.2
(22) Anmeldetag: 04.02.2010
(51) Int. Cl.: F01D 11/24

(54) **Laufspalteinstellungssystem einer Fluggasturbine**
Gas turbine active tip clearance control
Réglage actif du jeu des aubes pour des turbines à gaz

(30) Priorität: 26.02.2009 DE 102009010647
(43) Veröffentlichungstag der Anmeldung: 01.09.2010
(73) Patentinhaber: Rolls-Royce Deutschland Ltd & Co KG, 15827 Blankenfelde-Mahlow (DE)
(72) Erfinder: Negulescu, Dimitrie, Dr., 14163 Berlin (DE); Lisiewicz, Stephan, 12161 Berlin (DE)
(74) Vertreter: Hoefer & Partner Patentanwälte mbB

(56) Entgegenhaltungen:
- EP-A2- 1 148 221
- EP-A2- 1 923 539
- WO-A1-92/11444
- DE-A1- 3 437 076
- DE-A1- 3 540 943
- DE-A1-102007 044 730
- GB-A- 2 437 295
- US-A1- 2004 240 988
- US-B1- 6 487 491

## Beschreibung

Die Erfindung bezieht sich auf eine Fluggasturbine mit einem Laufspalteinstellungssystem mit einem Kerntriebwerk, welches eine Turbine umfasst, deren Schaufelreihen zum Turbinengehäuse einen Laufspalt aufweisen, wobei das Turbinengehäuse von einem Kerntriebwerklüftungsraum umschlossen wird, welcher von einer Verkleidung des Kerntriebwerks umschlossen ist, wobei die Verkleidung eine innere Wandung eines Nebenstromkanals bildet, und wobei eine Nebenströmung den Nebenstromkanal durchströmt.

Zum Stand der Technik werden die US 2007/0140838 A1 und die US 2007/0140839 A1 genannt.

Aus dem Stand der Technik ist es bekannt, Systeme zur aktiven Laufspalteinstellung von Fluggasturbinen zu verwenden. Diese werden als ATCC (Activ Tip Clearance Control System) bezeichnet. Dabei wird durch äußere Kühlung des Turbinengehäuses der Laufspalt zwischen den Belägen an der radial inneren Oberfläche des Turbinengehäuses und den Turbinenrotorschaufelspitzen beeinflusst. Hierdurch werden thermische Ausdehnungen des Turbinengehäuses ebenso berücksichtigt, wie radiale Ausdehnungen der Turbinenrotoren- und Schaufeln.

Der Stand der Technik setzt für derartige aktive Systeme Luft als Kühlmedium ein. Der Luftstrom wird aus dem Triebwerksnebenstrom entnommen, welcher durch einen Bläser komprimiert wird.

Bei diesen Systemen ergibt sich unter nahezu allen Betriebsbedingungen ein Durchströmdruckgefälle von mindestens einem halben bar gegenüber der Umgebung. Die Systeme entnehmen die für den Schub wertvolle Luft aus dem Triebwerksnebenstrom und entsorgen diese, nachdem sie durch die Kühlluftverteiler geströmt ist, zur Umgebung der Triebwerksgondel. Somit wird die zur Kühlung verwendete Luft ungenutzt in die Umgebung abgeleitet. Dies bedeutet einen nicht unerheblichen Energieverlust und ist damit auch umweltbelastend.

Andere aus dem Stand der Technik bekannte Systeme entnehmen die Kühlluft aus dem Verdichter. Dies führt jedoch zu einer noch schlechteren Energiebilanz des Gesamtprozesses.

Aus der DE 34 37 076 A1 ist ein Laufspalteinstellungssystem bekannt, bei welchem Luft aus einem Nebenstromkanal entnommen und zur aktiven Spalteinstellung mehreren Kühlluftverteilern zugeführt wird. Die Kühlluft wird dabei stromauf im Bereich einer Düse des Nebenstromkanals entnommen und stromab der Düse zur Umgebung hin abgeführt.

Die US 6 487 491 B1 zeigt ein Laufspalteinstellungssystem einer Gasturbine, bei welchem Kühlluft aus einem Nebenstromkanal entnommen und durch eine Ventileinrichtung einem Kühlluftverteiler zugeführt wird.

Bei dem in der EP 1 148 221 A2 beschriebenen Laufspalteinstellungssystem erfolgt die Entnahme der Kühlluft ebenfalls aus dem Nebenstromkanal. Diese wird durch ein Absperrorgan geleitet und einem Einlaufkanal eines Kühlluftverteilers zugeführt. Die Kühlluft wird nachfolgend stromab einer Düse des Nebenstromkanals in die Umgebung ausgeblasen.

Aus der DE 35 40 943 A1 ist es ebenfalls bekannt, Kühlluft aus dem Nebenstromkanal zu entnehmen. Diese Kühlluft wird mittels eines Ventils in die Atmosphäre abgeblasen.

Die US 2004/240988 A1 zeigt ebenfalls die Entnahme von Kühlluft aus einem Nebenstromkanal. Die Kühlluft wird stromab einer Düse des Nebenstromkanals in die Umgebung rückgeführt.

Der Erfindung liegt die Aufgabe zugrunde, eine Fluggasturbine der eingangs genannten Art zu schaffen, welche bei einfachem Aufbau und einfacher, kostengünstiger Implementierung hinsichtlich der Gesamtenergiebilanz besonders wirksam ist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass Luft aus einer Nebenströmung in dem Nebenstromkanal mittels eines Regelsystems über zumindest einen Einlassstutzen in den Kerntriebwerkslüftungsraum eingeleitet wird und dass die Luft nachfolgend in die Nebenströmung rückgeführt wird.

Das erfindungsgemäße System zeichnet sich durch eine Reihe erheblicher Vorteile aus. Der wesentliche Vorteil liegt darin, dass die Kühlluft nach der Durchströmung des einen oder der mehreren Kühlluftverteiler durch die Rückleitung in die Nebenströmung für den Triebwerksschub zur Verfügung steht. Wenn beispielsweise bei einem üblichen Triebwerk 0,7 % der Luft aus der Nebenströmung abgeführt wird und nicht, wie beim Stand der Technik, ungenutzt abgeleitet, sondern nachfolgend für den Schub verwendet wird, so ergibt sich eine erhebliche Leistungssteigerung des Triebwerks. Das erfindungsgemäße Laufspalteinstellungs-system ist somit für die Energiebilanz des Gesamtprozesses in höchstem Maße wirkungsvoll.

Erfindungsgemäß ist es besonders günstig, wenn die Luft in zumindest einen Luftverteiler, welcher angrenzend an das Gehäuse angeordnet ist, einleitbar ist. Dabei ist es besonders günstig, wenn die hierbei auftretenden Strömungsverluste und Energieverluste der Kühlluft minimiert werden.

Kühlluft wird bevorzugterweise von dem Kerntriebwerklüftungsraum durch zumindest eine aerodynamische Verkleidung eines Verbindungselements des Kerntriebwerks mit dessen Aufhängungssystem einer in die Nebenströmung mündenden Auslassdüse zugeführt. Hierdurch erfolgt eine besonders wirkungsvolle Rückführung der Kühlluft.

Das Regelsystem umfasst bevorzugterweise ein Regelventil, welches motorisch über eine Steuerung steuerbar ist. Auf diese Weise ist eine optimale Anpassung des Kühlluftstroms möglich.

Im Folgenden wird die Erfindung anhand eines Ausführungsbeispiels in Verbindung mit der Zeichnung beschrieben. Dabei zeigt:
- Fig. 1: eine schematische Axial-Teilschnittansicht eines erfindungsgemäßen Ausführungsbeispiels der Fluggasturbine,

- Fig. 2: eine Radial-Schnittansicht gemäß Fig. 1, und
- Fig. 3: eine perspektivische Prinzipskizze der Ausleitung der Luft durch eine Auslassdüse in die Nebenströmung.

Erfindungsgemäß durchströmt eine Nebenströmung 3 einen Nebenstromkanal 1, der radial nach innen durch eine Verkleidung 2 eines Kerntriebwerks begrenzt wird.

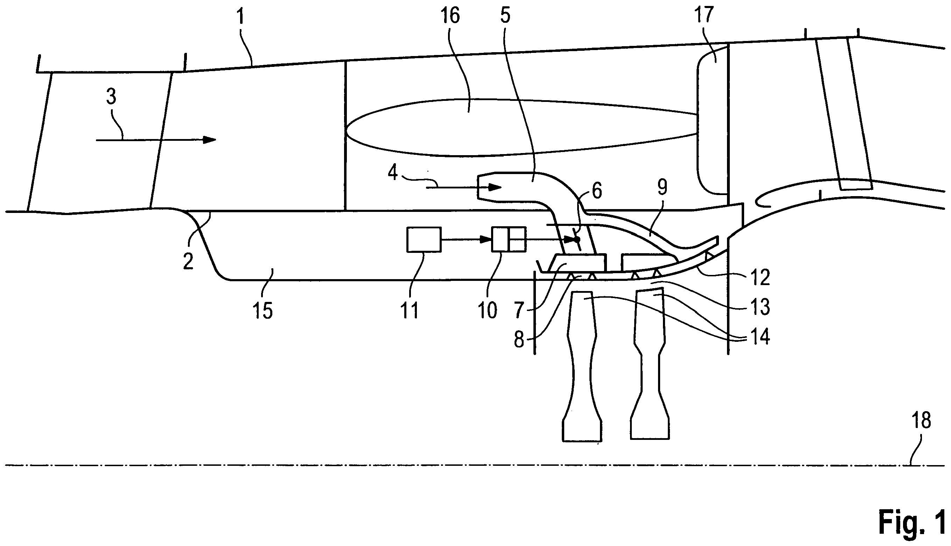

In dem Nebenstromkanal 1 ist zumindest eine aerodynamische Verkleidung 16 angeordnet, deren Querschnitt in Fig. 1 um 90° gekippt dargestellt ist und zur aerodynamischen Verkleidung der Verbindungen und Leitungen zwischen Kerntriebwerk und Gondel dient. Diese Ausgestaltungen gehören abgesehen von der Auslassöffnung 17 zum Stand der Technik, so dass auf eine detaillierte Beschreibung an dieser Stelle verzichtet werden kann.

In dem Nebenstromkanal 1 ist ein Einlassstutzen 5 dargestellt, welcher einen Lufteinlass zum aktiven Laufspalteinstellungssystem bildet. Die durch den Einlassstutzen 5 eintretende Luftströmung 4 wird somit radial nach innen geleitet und gelangt in einen abzweigenden Kanal einer direkten, ungeregelten Kühlluftführung 9 und zu einem Regelventil 6.

Das Regelventil 6 ist über einen Motor 10 betätigbar, welcher über eine Steuerung 11 ansteuerbar ist.

Die Kühlluft gelangt nachfolgend in einen Kühlluftverteiler 7, welcher angrenzend an das Turbinengehäuse 12 angeordnet ist, so dass die Kühlluft durch Prallkühldüsen oder eine Lochung 8 auf die Wandung eines Turbinengehäuses 12 auftreffen kann. Hierdurch erfolgt die Kühlung und die Spaltregelung 13.

Radial innenliegend zeigt die Fig. 1 Turbinenradschaufelspitzen 14.

Die oben beschriebene Anordnung, insbesondere der Kühlluftverteiler 7, befindet sich in einem Kerntriebwerklüftungsraum 15.

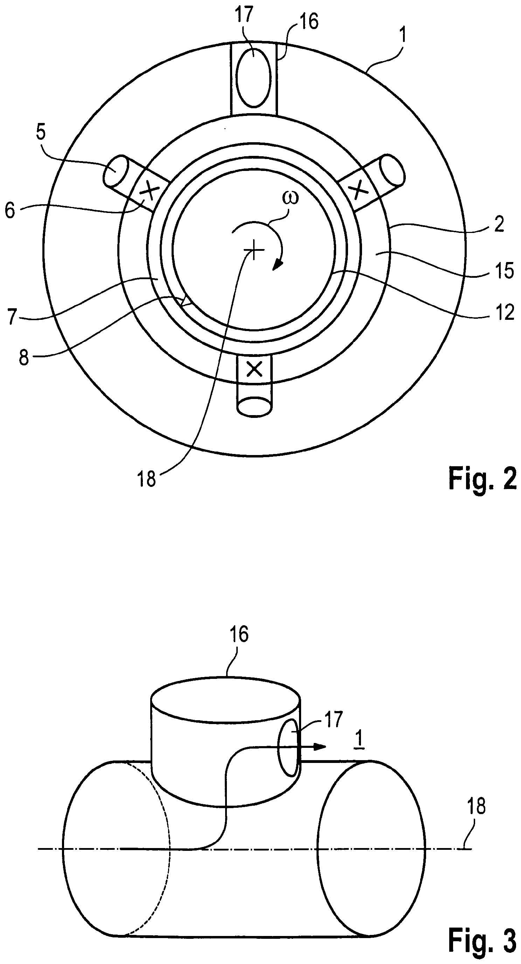

Aus dem Kerntriebwerklüftungsraum 15 gelangt die Luft in den Innenraum der aerodynamischen Verkleidung, so wie dies in Fig. 3 schematisch dargestellt ist und strömt über eine Auslassdüse 17 in den Nebenstromkanal 1.

Das Arbeitsdruckgefälle des beschriebenen Laufspalteinstellungssystems ergibt sich durch den Gesamtdruck am Einlauf des Einlassstutzens 5 minus dem statischen Druck an der Auslassdüse 17.

Erfindungsgemäß wird die Luft somit dem Nebenstromkanal 3 durch die Lufteinlässe 4, 5 entnommen. Die Anzahl dieser Lufteinlässe (Einlassstutzen 5 mit Lufteinlass 4) kann am Umfang variiert werden. Besonders günstig ist dabei eine gleichmäßige Verteilung am Umfang, so wie dies in Fig. 2 gezeigt ist.

Der Kühlluftverteiler 7 sorgt erfindungsgemäß für eine Beruhigung der Strömung und eine gleichmäßige Verteilung der Luft in Umfangsrichtung, damit diese gleichmäßig durch die Prallkühldüsen 8 austritt und auf das zu kühlende Turbinengehäuse 12 auftrifft.

Durch den Prallkühlungseffekt werden hohe Wärmeübergangswerte und eine große Temperaturreduktion des Turbinengehäuses 12 erreicht, wodurch der Laufspalt 13 minimiert wird.

Im weiteren Verlauf wird die Luft zur konvektiven Kühlung entlang des Gehäuses geführt, bevor sie dann in den Kerntriebwerklüftungsraum 15 strömt und von dort, wie beschrieben, in den Nebenstrom 3 über die Kühlluftauslassdüsen 17 zugeführt wird.

Erfindungsgemäß ist es möglich, durch geeignete aerodynamische Auslegung die Druckverluste entlang der einzelnen Komponenten des erfindungsgemäßen Systems zu minimieren, so dass das System mit einem kleinen Druckgefälle arbeiten kann, welches nur 1/10 eines aus dem Stand der Technik bekannten Hochdrucksystems entspricht.

Erfindungsgemäß leistet die von der Auslassdüse 17 stromauf einer nicht dargestellten Triebwerksdüse im Nebenstrom zurückgeleitete Kühlströmung noch vollständige Arbeit für den Schub der Fluggasturbine. Erfindungsgemäß ist es möglich, durch eine geeignete Steuerung des aktiven Laufspalteinstellungssystems durch die Steuerung der Fluggasturbine (EEC) eine Optimierung des Systems für eine maximale Effizienz und eine Turbinenwirkungsgraderhöhung ohne Anstreifgefahr zu erreichen.

Das erfindungsgemäße Laufspalteinstellungssystem kann durch eine Änderung des Drucks, durch eine Änderung der Durchströmfläche oder durch eine Kombination aus beidem geregelt bzw. optimiert werden.

Insgesamt ergibt sich somit durch die günstige Gesamt-Energiebilanz eine Reduzierung des Kraftstoffverbrauchs. Weiterhin ist es möglich, die Kosten zu reduzieren und das Systemgewicht zu senken. Zusätzlich führt die erfindungsgemäße Kühlung zu einer Erhöhung der Triebwerkszuverlässigkeit sowie zu einer positiven Umweltbilanz.

### Bezugszeichenliste

- 1: Nebenstromkanal
- 2: Verkleidung des Kerntriebwerks
- 3: Strömungsrichtung im Nebenstromkanal / Nebenströmung
- 4: Lufteinlass zum ATCC System
- 5: Einlassstutzen
- 6: Regelventil
- 7: Kühlluftverteiler
- 8: Prallkühldüsen/Lochung
- 9: Direkte, ungeregelte Kühlluftführung
- 10: Motor zur Ventilbetätigung
- 11: Steuerungsblock (durch die EEC) / Steuerung
- 12: Turbinengehäuse
- 13: Spalt (Regelungsziel) / Laufspalt
- 14: Turbinenradschaufelspitzen
- 15: Kerntriebwerklüftungsraum (Zone 2)
- 16: Aerodynamische Verkleidung der Verbindungen zum Kerntriebwerk
- 17: ATCC Kühlluftauslassdüse im Nebenstromkanal / Auslassdüse
- 18: Maschinenachse

## Patentansprüche

1. Fluggasturbine mit einem Laufspalteinstellungssystem mit einem Kerntriebwerk, welches eine Turbine umfasst, deren Schaufelreihen zu einem Turbinengehäuse (12) einen Laufspalt (13) aufweisen, wobei das Turbinengehäuse (12) von einem Kerntriebwerklüftungsraum (15) umschlossen wird, welcher von einer Verkleidung (2) des Kerntriebwerks umschlossen ist, wobei die Verkleidung (2) eine innere Wandung eines Nebenstromkanals (1) bildet, wobei eine Nebenströmung (3) den Nebenstromkanal durchströmt und Luft aus dem Nebenstromkanal (1) mittels eines Regelsystems (6, 10, 11) über zumindest einen Einlassstutzen (5) in einen Kühlluftverteiler (7) einleitbar ist, **dadurch gekennzeichnet, dass** die Luft nachfolgend in die Nebenströmung (3) zurückführbar ist.

2. Fluggasturbine nach Anspruch 1, **dadurch gekennzeichnet, dass** Luft in zumindest einen Luftverteiler (7), welcher angrenzend an das Turbinengehäuse (12) zur Regelung des Laufspalts (13) angeordnet ist, einleitbar ist.

3. Fluggasturbine nach Anspruch 1 oder 2, **dadurch gekennzeichnet, dass** Luft vom Kerntriebwerklüftungsraum (15) durch zumindest eine aerodynamische Verkleidung (16) der Anbauteile und Leitungen einer in die Nebenströmung mündenden Auslassdüse (17) zuführbar ist.

4. Fluggasturbine nach einem der Ansprüche 1 bis 3, **dadurch gekennzeichnet, dass** das Regelsystem zumindest ein Regelventil (6) umfasst, welches mittels eines Motors (10) über eine Steuerung (11) betätigbar ist.

5. Fluggasturbine nach einem der Ansprüche 1 bis 4, **dadurch gekennzeichnet, dass** in Axialrichtung mehrere Kühlluftverteiler (7) vorgesehen sind.

## Claims

1. Aircraft gas turbine having a running-gap control system with a core engine including a turbine whose blade rows have a running gap (13) to a turbine casing (12), with the turbine casing (12) being surrounded by a core-engine ventilation compartment (15) enclosed by a fairing (2) of the core engine, with the fairing (2) forming an inner wall of a bypass duct (1), wherein a bypass flow (3) flows through the bypass duct and air from the bypass duct (1) can be introduced by means of a control system (6, 10, 11) via at least one inlet nozzle (5) into a cooling-air distributor (7), **characterized in that** the air can subsequently be returned to the bypass flow (3).

2. Aircraft gas turbine in accordance with Claim 1, **characterized in that**, for the purpose of controlling the running gap (13), air is introducible into at least one air distributor (7) arranged adjacent to the turbine casing (12).

3. Aircraft gas turbine in accordance with Claim 1 or 2, **characterized in that** air from the core engine ventilation compartment (15) can be routed through at least one aerodynamic fairing (16) of the accessories and lines to an outlet nozzle (17) issuing into the bypass flow.

4. Aircraft gas turbine in accordance with one of the Claims 1 to 3, **characterized in that** the control system includes at least one control valve (6) which can be actuated by a motor (10) via a control system (11).

5. Aircraft gas turbine in accordance with one of the Claims 1 to 4, **characterized in that** several cooling-air distributors (7) are provided in the axial direction.

## Revendications

1. Turbine à gaz aéronautique avec un système de contrôle du jeu en bout d'aube avec un moteur de base qui comprend une turbine dont les rangées d'aubes présentent un jeu en bout d'aube (13) par rapport à un carter de turbine (12), sachant que le carter de turbine (12) est entouré par un compartiment de ventilation du moteur de base (15), lequel compartiment de ventilation est entouré par un carénage (2) du moteur de base, sachant que le carénage (2) forme une paroi intérieure d'un canal de flux secondaire (1), sachant qu'un flux secondaire (3) traverse le canal de flux secondaire et que de l'air provenant du canal de flux secondaire (1) peut être introduit dans un distributeur d'air de refroidissement (7) au moyen d'un système de contrôle (6, 10, 11) via au moins une tuyère d'admission (5), **caractérisée en ce que** l'air peut être ensuite reconduit dans le flux secondaire (3).

2. Turbine à gaz aéronautique selon la revendication n° 1, **caractérisée en ce que** de l'air peut être introduit dans au moins un distributeur d'air (7) qui est disposé au voisinage du carter de turbine (12) pour contrôler le jeu en bout d'aube (13).

3. Turbine à gaz aéronautique selon la revendication n° 1 ou n° 2, **caractérisée en ce que** de l'air provenant du compartiment de ventilation du moteur de base (15) peut être amené à une tuyère d'échappement (17) débouchant dans le flux secondaire, par le biais d'au moins un carénage aérodynamique (16) des accessoires et conduites.

4. Turbine à gaz aéronautique selon une des revendications n° 1 à n° 3, **caractérisée en ce que** le système de contrôle comprend au moins une vanne de réglage (6) qui est actionnable au moyen d'un moteur (10) via un système de contrôle (11).

5. Turbine à gaz aéronautique selon une des revendications n° 1 à n° 4, **caractérisée en ce que** plusieurs distributeurs d'air de refroidissement (7) sont prévus dans le sens axial.
